# EUROPÄISCHE PATENTSCHRIFT

(11) **EP 1 118 055 B1**
(45) Veröffentlichungstag und Bekanntmachung des Hinweises auf die Patenterteilung: **08.01.2003**
(21) Anmeldenummer: 99969807.9
(22) Anmeldetag: 23.09.1999
(51) Int. Cl.: G06F 1/08, H04J 3/06

(54) **SPIKEFREIE TAKTUMSCHALTUNG**
SPIKE-FREE CLOCK SWITCHING
COMMUTATION D'HORLOGE SANS VARIATION BRUSQUE

(30) Priorität: 29.09.1998 DE 19844671
(43) Veröffentlichungstag der Anmeldung: 25.07.2001
(73) Patentinhaber: SIEMENS AKTIENGESELLSCHAFT, 80333 München (DE)
(72) Erfinder: MÄNZ, Martin, D-85386 Eching (DE); ZÖLLER, Georg, D-57520 Steinebach (DE)
(86) Internationale Anmeldenummer: DE9903058
(87) Internationale Veröffentlichungsnummer: WO00019302

(56) Entgegenhaltungen:
- JP-A- 1 150 921
- US-A- 4 970 405
- US-A- 5 652 536
- ANONYMOUS: "Method to Select One of Two Clocks While Avoiding Narrow Pulses." IBM TECHNICAL DISCLOSURE BULLETIN, Bd. 32, Nr. 9B, 1. Februar 1990 (1990-02-01), Seiten 82-84, XP000082242 New York, US
- PATENT ABSTRACTS OF JAPAN vol. 1998, no. 10, 31. August 1998 (1998-08-31) -& JP 10 124167 A (MIYAGI OKI DENKI KK;OKI ELECTRIC IND CO LTD), 15. Mai 1998 (1998-05-15) -& US 5 969 558 A (SBE SHINICHI) 19. Oktober 1999 (1999-10-19)

## Beschreibung

Der Anmeldungsgegenstand betrifft eine Schaltungsanordnung zur Umschaltung von einem ersten Taktsignal auf ein zweites Taktsignal umfassend die Merkmale des Oberbegriffs des Anspruchs.

In Vermittlungssystemen, in denen Taktsignale aus Gründen der Redundanz gedoppelt vorgesehen sind, soll zwischen den beiden Taktsignalen gleicher Frequenz und beliebig unterschiedlicher Phasenlage umgeschaltet werden, ohne dass dabei Spikes/Glitches auftreten.

Diese Problemstellung wird herkömmlich durch Schaltungen gelöst, die eine Kombination von Monoflops mit diskreten Bauteilen - wie zum Beispiel Widerständen und Kondensatoren - aufweisen. Bei diesen Schaltungen macht es sich nachteilig bemerkbar, dass sie in einer integrierten Schaltung nicht vollständig implementierbar sind.

Aus der US 4970405 ist eine Schaltungsanordnung zur Auswahl eines von mehreren Taktsignalen bekannt, wobei die Abgabe eines unerwünschten kurzen Pulses dadurch vermieden wird, dass das ausgewählte Taksignal um mindestens einen Takt verzögert eingeschaltet wird.

Der Anmeldungsgegenstand stellt sich die Aufgabe, eine Schaltungsanordnung zur Umschaltung zwischen Taktsignalen anzugeben, die als digitale Schaltung vollständig in einen integrierten Schaltkreis implementierbar ist und die eine beliebige Phasenlage der Taktsignale gestattet.

Das Problem wird bei einer Schaltungsanordnung mit den im Oberbegriff umfassten Merkmalen durch die Merkmale des kennzeichnenden Teils des Anspruchs gelöst.

Die anmeldungsgemäße Schaltungsanordnung ist rein digital, sie benötigt keinerlei diskrete Bauelemente, womit sie in einer Integrierten Schaltung, wie zum Beispiel einem ASIC (Application Specific Integrated Circuit) oder einem FPGA (Flash Programmable Gate Array) implementierbar ist. Die Schaltungsanordnung ist mit einem asynchronen Signal zur Umschaltung zwischen den Taktsignalen beaufschlagbar. Die Phasenlage der Taktsignale ist beliebig.

Der Anmeldungsgegenstand wird im Folgenden als Ausführungsbeispiel in einem zum Verständnis erforderlichem Umfang anhand von Figuren näher beschrieben. Dabei zeigen:

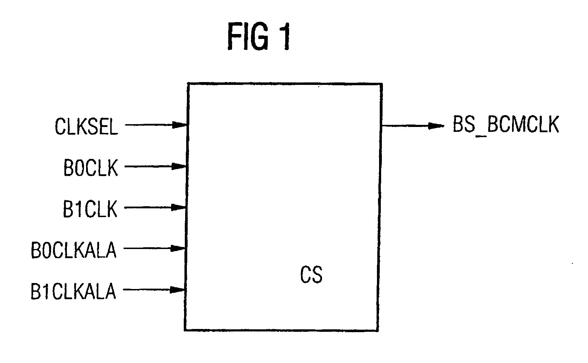

- Figur 1: ein Blockschaltbild einer Schaltungsanordnung zur Umschaltung zwischen Taktsignalen,
- Figur 2: ein Schaltbild einer anmeldungsgemäßen Schaltungsanordnung zur Umschaltung zwischen Taktsignalen auf Gatterebene,
- Figur 3: ein Signalzustandsdiagramm möglicher Zustände von einzelnen Signalen bei der Umschaltung von einem Taktsignal auf ein anderes Taktsignal und
- Figur 4: ein Zustandsdiagramm anderer möglicher Zustände von einzelnen Signalen bei der Umschaltung von einem Taktsignal auf ein anderes Taktsignal.

In den Figuren bezeichnen gleiche Bezeichnungen gleiche Elemente.

Die Taktauswahlschaltung CS (für: Clock Selection), der eingangsseitig ein Taktauswahlsignal CLKSEL, ein erstes Taktsignal B0CLK, ein zweites Taktsignal B1CLK, ein erstes Taktalarmsignal B0CLKA und ein zweites Taktalarmsignal B1CLKALA zugeführt ist, gibt ausgangsseitig das Ausgangstaktsignal BS_BCMCLK ab.

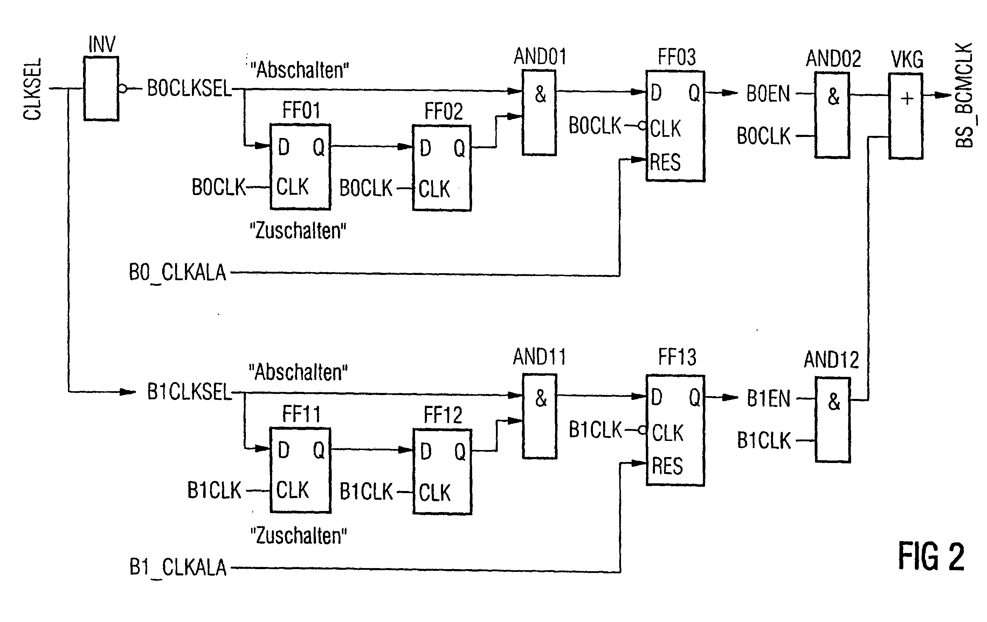

Die Taktauswahlschaltung in Figur 2 weist zwei gleiche Schaltungsteile auf, wobei der oben dargestellte, erste Schaltungsteil dem ersten Taktsignal und der unten dargestellte, zweite Schaltungsteil dem zweiten Taktsignal zugeordnet sind. Das Taktauswahlsignal CLKSEL ist dem zweiten Schaltungsteil als zweites Taktauswahlsignal B1CLKSEL und über einen Inverter INV invertiert, dem ersten Schaltungsteil als erstes Taktauswahlsignal B0CLKSEL zugeführt. Einem Flip-Flop FF 01 im ersten Schaltungsteil ist an seinem Dateneingang D das erste Taktauswahlsignal B0CLKSEL und an seinem Takteingang das erste Taktsignal B0CLK zugeführt. Einem zweiten Flip-Flop FF02 im ersten Schaltungsteil ist an seinem Dateneingang D das von dem ersten Flip-Flop am Ausgang Q abgegebene Signal und an seinem Takteingang CLK das Taktsignal B0CLK zugeführt. Einem logisch UND-Gatter AND01 ist eingangsseitig das erste Taktauswahlsignal B0CLKSEL und das am Ausgang Q des Flip-Flops FF02 abgegebene Signal eingangsseitig zugeführt. Ein Flip-Flop FF03 ist an seinem mit D bezeichnetem Eingang mit dem von dem UND-Gatter AND01 abgegebenen Signal, an seinem invertierenden Takteingang CLK mit dem ersten Taktsignal B0CLK und an seinem Rücksetzeingang RES mit dem ersten Alarmsignal B0CLKALA des ersten Taktsignales B0CLK beaufschlagt. Das von dem Flip-Flop FF3 an seinem Ausgang Q abgegebene Signal bildet ein Ermöglichungssignal B0EN für das erste Taktsignal B0CLK. Einem logisch UND-Gatter AND02 ist eingangsseitig das Ermöglichungssignal B0EN für das erste Taktsignal B0CLK und das erste Taktsignal B0CLK zugeführt.

Der zweite Schaltungsteil für das zweite Taktsignal ist prinzipiell gleichartig zu dem ersten Schaltungsteil für das erste Taktsignal aufgebaut.

Ein Verknüpfungsglied VKG, dem eingangsseitig die von dem UND-Gatter AND02 und dem UND-Gatter AND12 abgegebenen Signale zugeführt sind, gibt an seinem Ausgang das ausgewählte Taktsignal BS_BCMCLK ab.

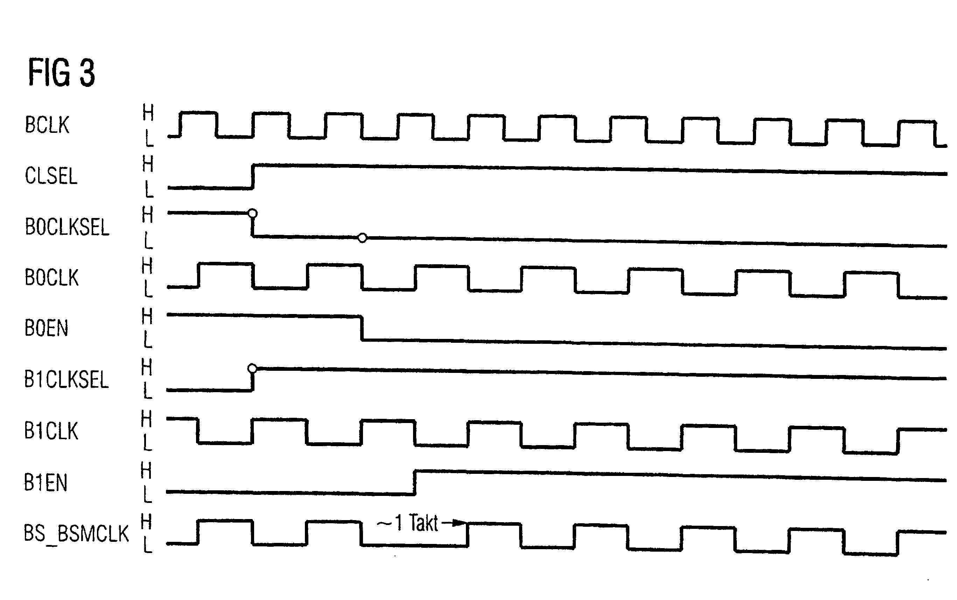

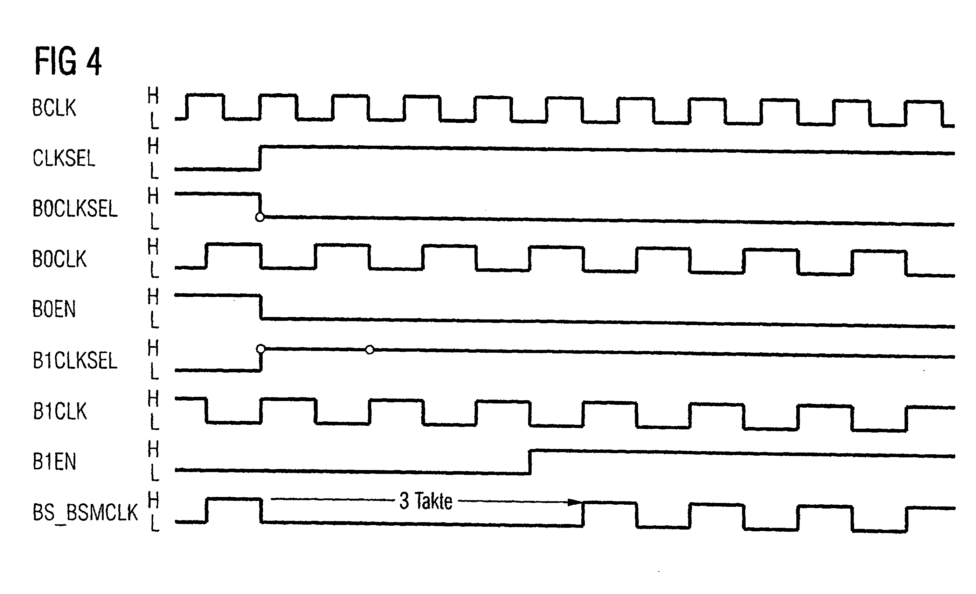

Wie aus den Figuren 3 und 4 hervorgeht, erfolgt die Taktumschaltung in zwei Phasen. Erfolgt eine Umschaltung der Taktsignale, was in Figur 3 und 4 in Zeile B0CLKSEL durch einen Zustandswechsel des Taktauswahlsignals vom logisch hohen Pegel (H) zum logisch niedrigen Pegel (L) dargestellt ist, wird das bislang als Ausgangstaktsignal durchgeschaltete Taktsignal (in Figur 3 und Figur 4 das erste Taktsignal B0CLK) mit der ersten fallenden Flanke dieses Taktsignals abgeschaltet. Bei der Umschaltung wird das bislang nicht als Ausgangstaktsignal durchgeschaltete Taktsignal (in Figur 3 und Figur 4 das Taktsignal B1CLK) während seines logisch niedrigen Pegels zugeschaltet. Die Zuschaltung erfolgt mit einer Verzögerung, die eine Taktlücke von, wie in Figur 3 dargestellt, minimal einer Taktperiode und maximal, wie in Figur 4 dargestellt, drei Taktperioden zur Folge hat.

Wie aus den Figuren 3 und 4 hervorgeht, können das erste Taktsignal und das zweite Taktsignal durch zueinander komplementäre Taktsignale gegeben sein. Bei der Schaltungsanordnung ist sichergestellt, dass bei einem aktiven Taktalarmsignal nicht auf das zugehörige Taktsignal umgeschaltet werden kann.

## Patentansprüche

1. Schaltungsanordnung zur Umschaltung von einem ersten Taktsignal (B0CLK) auf ein zweites Taktsignal (B1CLK) nach Maßgabe eines Taktauswahlsignals (CLKSEL) bei der
- dem ersten Taktsignal und dem zweiten Taktsignal zugeordnete Schaltungszweige gegeben sind,
- ein Verknüpfungsglied (VKG) gegeben ist, das eingagsseitig mit den Schaltungszweigen verbunden ist und an dessen Ausgang das Ausgangstaktsignal (BS_BCMCLK) abgebbar ist,
**dadurch gekennzeichnet, dass**
- der erste Schaltungszweig für das erste Taktsignal mit einem ersten Flip-Flop (FF01), einem zweiten Flip-Flop (FF02), einem ersten UND-Gatter (AND01), einem dritten Flip-Flop (FF03) und einem zweiten UND-Gatter (AND02) gebildet ist,
- der zweite Schaltungszweig für das zweite Taktsignal mit einem elften Flip-Flop (FF11), einem zwölften Flip-Flop (FF12), einem elften UND-Gatter (AND11), einem dreizehnten Flip-Flop (FF13) und einem zwölften UND-Gatter (AND12) gebildet ist,
- das invertierte Taktauswahlsignal (CLKSEL) als Auswahlsignal (B0CLKSEL) für das erste Taktsignal dem Dateneingang (D) des ersten Flip-Flops (FF01) und dem ersten Eingang des ersten UND-Gatters (AND01) zugeführt ist,
- das erste Taktsignal (B0CLK) dem Takteingang (CLK) des ersten Flip-Flops (FF01), dem Takteingang (CLK) des zweiten Flip-Flops (FF02), dem invertierenden Takteingang des dritten Flip-Flops (FF03) und dem ersten Eingang des zweiten UND-Gatters (AND02) zugeführt ist,
- der Ausgang (Q) des ersten Flip-Flops (FF01) mit dem Dateneingang (D) des zweiten Flip-Flops (FF02) verbunden ist,
- der Ausgang (Q) des zweiten Flip-Flops (FF02) mit dem zweiten Eingang des ersten UND-Gatters (AND01) verbunden ist,
- der Ausgang des ersten UND-Gatters (AND01) mit dem Dateneingang (D) des dritten Flip-Flops (FF03) verbunden ist,
- das dritte Flip-Flop (FF03) an seinem Rücksetzeingang (RES) mit einem dem ersten Taktsignal zugehörigen Alarmsignal (B0_CLKALA) beaufschlagt ist,
- der Ausgang (Q) des dritten Flip-Flops (FF03) mit dem zweiten Eingang des zweiten UND-Gatters (AND02) verbunden ist,
- das Taktauswahlsignal (CLKSEL) als Auswahlsignal (B1CLKSEL) für das zweite Taktsignal dem Dateneingang (D) des elften Flip-Flops (FF11) und dem ersten Eingang des elften UND-Gatters (AND11) zugeführt ist,
- das zweite Taktsignal (B1CLK) dem Takteingang (CLK) des elften Flip-Flops (FF11), dem Takteingang (CLK) des zwölften Flip-Flops (FF12), dem invertierenden Takteingang des dreizehnten Flip-Flops (FF13) und dem ersten Eingang des zwölften UND-Gatters (AND12) zugeführt ist,
- der Ausgang (Q) des elften Flip-Flops (FF11)mit dem Dateneingang (D) des zwölften Flip-Flops (FF12) verbunden ist,
- der Ausgang (Q) des zwölften Flip-Flops (FF12) mit dem zweiten Eingang des elften UND-Gatters (AND11) verbunden ist,
- der Ausgang des elften UND-Gatters (AND11) mit dem Dateneingang (D) des dreizehnten Flip-Flops (FF13) verbunden ist,
- das dreizehnte Flip-Flop (FF13) an seinem Rücksetzeingang (RES) mit einem dem zweiten Taktsignal (B1CLK) zugehörigen Alarmsignal (B1_CLKALA) beaufschlagt ist,
- der Ausgang (Q) des dreizehnten Flip-Flops (FF13) mit dem zweiten Eingang des zwölften UND-Gatters (AND12) verbunden ist,
- dem ersten Eingang des Verknüpfungsgliedes das am Ausgang des zweiten UND-Gatters (AND02) abgegebene Signal und dem zweiten Eingang des Verknüpfungsgliedes das am Ausgang des zwölften UND-Gatters (AND12) abgegebene Signal zugeführt sind.

## Claims

1. Circuit arrangement for switching from a first clock signal (B0CLK) to a second clock signal (B1CLK) according to a clock select signal (CLKSEL), in which
- circuit branches assigned to the first clock signal and to the second clock signal are provided,
- a combination element (VKG) is provided, which is connected on the input side to the circuit branches and at whose output the output clock signal (BS_BCMCLK) can be output, **characterized in that**
- the first circuit branch having a first flip-flop (FF01), a second flip-flip (FF02), a first AND gate (AND01), a third flip-flop (FF03) and a second AND gate (AND02) is formed for the first clock signal,
- the second circuit branch having an eleventh flip-flop (FF11), a twelfth flip-flop (FF12), an eleventh AND gate (AND11), a thirteenth flip-flop (FF13) and a twelfth AND gate (AND12) is formed for the second clock signal,
- the inverted clock select signal (CLKSEL) is fed as a select signal (B0CLKSEL) for the first clock signal to the data input (D) of the first flip-flip (FF01) and to the first input of the first AND gate (AND01),
- the first clock signal (BOCLK) is fed to the clock input (CLK) of the first flip-flop (FF01), the clock input (CLK) of the second flip-flop (FF02), the inverting clock input of the third flip-flop (FF03) and the first input of the second AND gate (AND02),
- the output (Q) of the first flip-flop (FF01) is connected to the data input (D) of the second flip-flop (FF02),
- the output (Q) of the second flip-flop (FF02) is connected to the second input of the first AND gate (AND01),
- the output of the first AND gate (AND01) is connected to the data input (D) of the third flip-flip (FF03),
- an alarm signal (B0_CLKALA) associated with the first clock signal is applied to the reset input (RES) of the third flip-flop (FF03),
- the output (Q) of the third flip-flip (FF03) is connected to the second input of the second AND gate (AND02),
- the clock select signal (CLKSEL) is fed as a select signal (B1CLKSEL) for the second clock signal to the data input (D) of the eleventh flip-flop (FF11) and to the first input of the eleventh AND gate (AND11),
- the second clock signal (B1CLK) is fed to the clock input (CLK) of the eleventh flip-flop (FF11), the clock input (CLK) of the twelfth flip-flop (FF12), the inverting clock input of the thirteenth flip-flop (FF13) and the first input of the twelfth AND gate (AND12),
- the output (Q) of the eleventh flip-flop (FF11) is connected to the data input (D) of the twelfth flip-flop (FF12),
- the output (Q) of the twelfth flip-flop (FF12) is connected to the second input of the eleventh AND gate (AND11),
- the output of the eleventh AND gate (AND11) is connected to the data input (D) of the thirteenth flip-flop (FF13),
- an alarm signal (B1_CLKALA) associated with the second clock signal (B1CLK) is applied to the reset input (RES) of the thirteenth flip-flop (FF13),
- the output (Q) of the thirteenth flip-flop (FF13) is connected to the second input of the twelfth AND gate (AND12),
- the first input of the combination element is fed the signal output at the output of the second AND gate (AND02) and the second input is fed the signal output at the output of the twelfth AND gate (AND12) of the combination element.

## Revendications

1. Circuit pour la commutation d'un premier signal d'horloge (B0CLK) à un deuxième signal d'horloge (B1CLK) suivant un signal de sélection d'horloge (CLKSEL) dans lequel :
- des branches de commutation attribuées au premier signal d'horloge et au deuxième signal d'horloge sont données,
- un élément logique (VKG) est donné, qui est raccordé côté entrée aux branches de commutation et à la sortie duquel le signal d'horloge de sortie (BS_BCMCLK) peut être émis,
**caractérisé en ce que**
- la première branche de commutation pour le premier signal d'horloge est formée par une première bascule (FF01), une deuxième bascule (FF02), une première grille ET (AND01), une troisième bascule (FF03) et une deuxième grille ET (AND02),
- la deuxième branche de commutation pour le deuxième signal d'horloge est formée avec une onzième bascule (FF11), une douzième bascule (FF12), une onzième grille ET (AND11), une treizième bascule (FF13) et une douzième grille ET (AND12),
- le signal de sélection d'horloge inversé (CLKSEL) est amené comme signal de sélection (B0CLKSEL) pour le premier signal d'horloge à l'entrée de données (D) de la première bascule (FF01) et à la première entrée de la première grille ET (AND01),
- le premier signal d'horloge (B0CLK) est amené à l'entrée d'horloge (CLK) de la première bascule (FF01), à l'entrée d'horloge (CLK) de la deuxième bascule (FF02), à l'entrée d'horloge s'inversant de la troisième bascule (FF03), et à la première entrée de la deuxième grille ET (AND02),
- la sortie (Q) de la première bascule (FF01) est raccordée à t'entrée de données (D) de la deuxième bascule (FF02),
- la sortie (Q) de la deuxième bascule (FF02) est raccordée à la deuxième entrée de la première grille ET (AND01),
- la sortie de la première grille ET (AND01) est raccordée à l'entrée de données (D) de la troisième bascule (FF03),
- la troisième bascule (FF03) est alimentée sur son entrée de réinitialisation (RES) par un signal d'alarme (B0_CLKALA) correspondant au premier signal d'horloge,
- la sortie (Q) de la troisième bascule (FF03) est raccordée à la deuxième entrée de la deuxième grille ET (AND02),
- le signal de sélection d'horloge (CLKSEL) est amené comme signal de sélection (B1CLKSEL) pour le deuxième signal d'horloge à l'entrée de données (D) de la onzième bascule (FF11) et à la première entrée de la onzième grille ET (AND11),
- le deuxième signal d'horloge (B1CLK) est amené à l'entrée d'horloge (CLK) de la onzième bascule (FF11), à l'entrée d'horloge (CLK) de la douzième bascule (FF12), à l'entrée d'horloge s'inversant de la treizième bascule (FF13), et à la première entrée de la douzième grille ET (AND12),
- la sortie (Q) de la onzième bascule (FF11) est raccordée à l'entrée de données (D) de la douzième bascule (FF12),
- la sortie (Q) de la douzième bascule (FF12) est raccordée à la deuxième entrée de la onzième grille ET (AND11),
- la sortie de la onzième grille ET (AND11) est raccordée à l'entrée de données (D) de la treizième bascule (FF13),
- la treizième bascule (FF13) est alimentée sur son entrée de réinitialisation (RES) par un signal d'alarme (B1_CLKALA) correspondant au deuxième signal d'horloge (B1CLK),
- la sortie (Q) de la treizième bascule (FF13) est raccordée à la deuxième entrée de la douzième grille ET (AND12),
- le signal émis à la sortie de la deuxième grille ET (AND02) est amené à la première entrée de l'élément logique, et le signal émis à la sortie de la douzième grille ET (AND12) est amené à la deuxième entrée de l'élément logique.
